# NEW EUROPEAN PATENT SPECIFICATION

(11) **EP 1 856 584 B2**
(45) Date of publication and mention of the opposition decision: **07.06.2023**
(45) Mention of the grant of the patent: 27.07.2016
(21) Application number: 06716983.9
(22) Date of filing: 08.03.2006
(51) Int. Cl.: E21B 7/02, E21B 15/00

(54) **SENSOR ASSEMBLY IN A GEARBOX FOR POSITIONING**
SENSORANORDNUNG EINES GETRIEBES ZUR POSITIONIERUNG
ENSEMBLE CAPTEUR SITUÉ DANS UNE BOITE DE VITESSES ET DESTINÉ AU POSITIONNEMENT D'ANGLE

(30) Priority: 11.03.2005 SE 0500559
(43) Date of publication of application: 21.11.2007
(73) Proprietor: Epiroc Rock Drills Aktiebolag, 701 91 Örebro (SE)
(72) Inventor: SAF, Fredrik, S-719 92 Vintrosa (SE)
(74) Representative: Ehrner & Delmar Patentbyrå AB
(86) International application number: PCT/SE2006/000298
(87) International publication number: WO 2006/096121

(56) References cited:
- EP-A1- 0 434 652
- WO-A1-00/34617
- WO-A1-00/34617
- WO-A1-2004/018805
- DD-A1- 201 510
- DE-A1- 19 849 997
- DE-A1- 19 849 997
- JP-A- H1 068 285
- US-A- 3 596 743
- US-A- 3 750 786
- US-A- 3 761 790
- US-A- 4 359 676
- US-A- 4 506 590
- US-A- 4 528 923
- US-A- 4 799 556
- US-A- 4 916 868
- US-A- 4 956 590
- US-A- 5 145 022
- US-A- 5 937 952
- US-A- 6 163 125
- US-B1- 6 258 007
- US-B1- 6 310 455
- US-B1- 6 667 562
- US-B2- 6 697 722
- US-B2- 7 589 608
- Sandvik: "AXERA T-11 DATA hydraulic drilling rig", Manual 102D1675-1 ver 1.6, 2000,

## Description

### Technical field

The present invention relates to a sensor assembly in a gearbox.

### Background

On modern rock drilling rigs, the positions of the drill booms are measured in order to be able to drill the holes in the correct place in the rock, possibly by using automatic controls. When measuring a position for a drill hole, the angles are measured at each joint of the drill booms and any telescopic movements of these. A boom has normally five to six joints, for which reason the measuring must be carried out with a high degree of precision in order to be able to calculate where the hole will be drilled.

In those instances where gearboxes are used in order to achieve the rotations in the joints of the drill booms, normally the angle in the gearbox is measured by measuring on the input motor shaft, whereby one multiplies with the gear ratio of the gearbox.

The problem with using a sensor assembly which measures the angle in the gearbox by measuring on the input motor shaft of the gearbox is that one does not measure the play which exists in nearly all gearboxes, which means that one, in applications that require a high precision, must use gearboxes which do not have any play, which results in use of expensive gearboxes as standard gearboxes have a play of the order of 0,3 degrees, which cannot be accepted when positioning.

A gearbox and sensor assembly is known from US-B-6,310,455.

### Brief description of the invention

The problem that one by measuring on the input motor shaft of the gearbox does not measure the play that exists in nearly all gearboxes, is solved according to the invention by arranging a sensor assembly in a gearbox which is used for positioning, where the sensor assembly comprises a relative to the gearbox housing fixed sensor, and where the angle in the gearbox between the gearbox housing and the output shaft of the gearbox is measured using a shaft fixed to the output shaft fixed and connected to the sensor, and wherein the sensor assembly comprises a control system arranged to receive information about the actual angle in the gearbox and cuts down the power to the motor of the gearbox when the gearbox approaches a pre-programmed end position.

By that the gearbox and sensor assembly comprises the characteristics of claim 1, the advantage of bringing about a sensor assembly which measures the angle in the gearbox including the play of the gearbox, which gives increased precision at the same time as inexpensive gearboxes with play can be utilized for measuring a position for a drill hole, is attained. Further, a robust assembly is attained as no measuring wheels or separate measuring teeth are needed on the outside of the gearbox.

### Brief description of the drawings

The invention will be described below in greater detail with reference to the attached drawings, in which:
Figure 1 shows schematically a view of a rock drilling rig,
Figure 2 shows schematically a view of a drill boom on a rock drilling rig according to figure 1,
Figure 3 shows schematically a first embodiment of a sensor assembly according to the invention, and
Figure 4 shows schematically a second embodiment of a sensor assembly according to the invention.

### Description of preferred embodiments

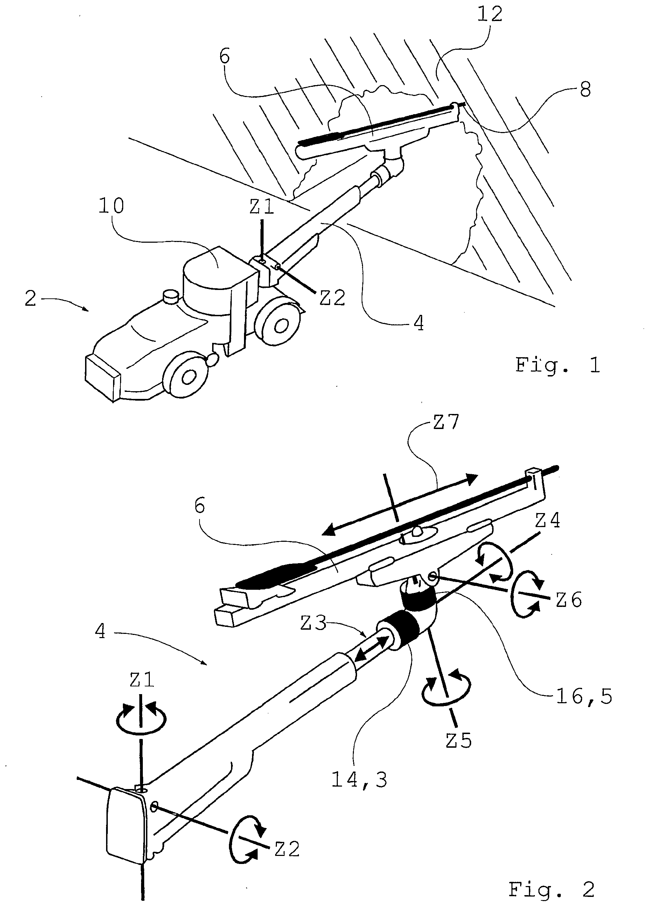

Figure 1 shows schematically a view of a rock drilling rig 2, comprising a drill boom 4, a feeder 6 and a cutter head 8. The rock drilling rig 2 can be remotely controlled by an operator via a cable (not shown) or by wireless means, but can also be controlled by an operator located in a cab 10 on the rock drilling rig 2. The operator can control the rock drilling rig 2 either manually, automatically or semi-automatically. When the operator wants to drill a hole in rock 12 using the rock drilling rig 2, it is important to be able to position the cutter head 8, that is the feeder 6, in the correct position and at a correct angular direction in relation to the rock 12 in order to create a required hole, in particular when several holes are to be drilled into the rock 12 parallel to each other, as takes place, for example, when drilling a tunnel through a mountain.

Figure 2 shows schematically a view of drill boom 4 on a rock drilling rig 2 according to figure 1. According to this embodiment, the drill boom 4 has five rotational degrees of freedom Z1, Z2, Z4, Z5, Z6, a telescopic degree of freedom Z3 at the telescopic part of the drill boom 4, and an additional telescopic degree of freedom Z7 in the form of feed movement and feed for the movable feeder 6. When measuring a position for a drill hole, on one hand the angles are measured at each joint of a drill boom 4 that has a rotational degree of freedom Z1, Z2, Z4, Z5, Z6, that is at each joint where rotation is possible and, on the other hand, any telescopic movements of the drill boom 4 are measured, that is any telescopic movements at the places on the drill boom 4 that have telescopic degrees of freedom Z3, Z7. In this embodiment gearboxes 14, 16 are used to achieve the rotations in two of the joints 3, 5 of the drill boom 4, that is to adjust the angle of two rotational degrees of freedom Z4, Z5 of the drill boom 4.

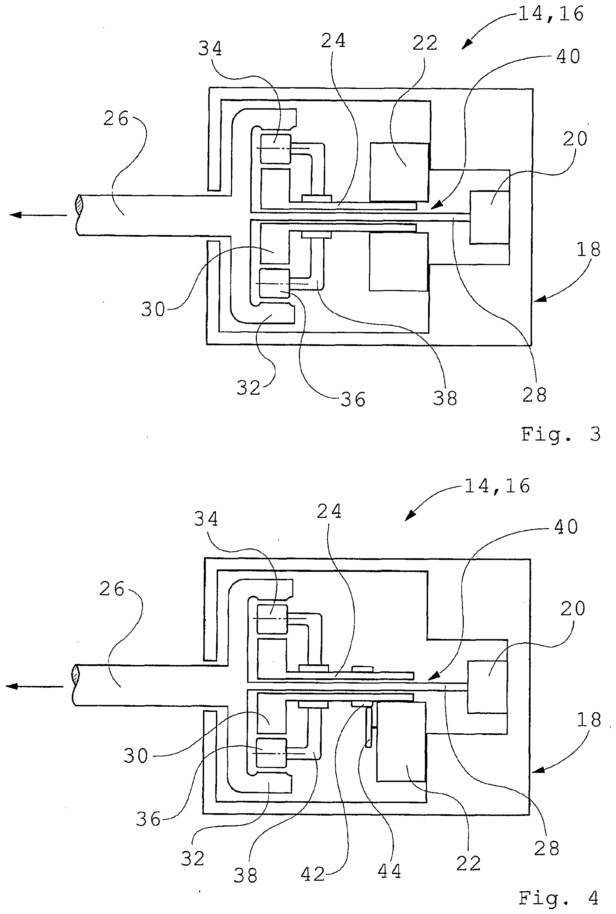

Figure 3 shows schematically a first embodiment of a sensor assembly according to the invention. The sensor assembly comprises a relative to a gearbox housing 18 fixed sensor 20, a propulsion motor 22, an input shaft 24 of the gearbox 14, 16, an output shaft 26 of the gearbox 14, 16, a to the output shaft 26 fixed shaft 28 which passes through the center of the gearbox 14, 16. In this embodiment the gearbox 14, 16 is a planetary gear whereby also inner sun wheel 30, outer sun wheel 32, planet pinions 34, 36 and planet pinion carrier 38 are shown in the figure. The shaft 28 which passes through the center of the gearbox 14, 16 can be fixed to the output shaft 26 by gluing, welding, or by mechanical fixing such as for example by use of splines, or in a similar way. Alternatively, the shaft 28 which passes through the center of the gearbox 14, 16 may be fixed to the output shaft 26 by that they are made in one piece. In this embodiment the propulsion motor 22 is a hollow piston engine with a central through hole 40 through which the shaft 28 which passes through the center of the gearbox 14, 16 may pass. As can be seen in the figure, the shaft 28 also passes through the input shaft 24 of the gearbox 14, 16. By using a compact piston engine, sideways protrusion of the propulsion motor 22 is avoided, which is an advantage when the propulsion motor 22 is to be mounted on a drill boom 4. By using gearboxes 14, 16 of the type mentioned above, in order to achieve the rotations in two of the joints of the drill boom 4, that is gearboxes 14, 16 where the angle between the gearbox housing 18 and the output shaft 26 of the gearbox 14, 16 is measured using a to the output shaft 26 fixed shaft 28 which passes through the center of the gearbox 14, 16, a sensor assembly which measures the angle in the gearbox 14, 16 including the play of the gearbox 14, 16 is achieved, which gives high precision in these joints when positioning the drill boom 4.

Figure 4 shows schematically a second embodiment of a sensor assembly according to the invention. This embodiment differs from that described in figure 3 only by that the propulsion motor 22 is arranged displaced from the center of the input shaft 24 of the gearbox 14, 16, whereby two toothed wheels 42, 44 are arranged to transfer the torque from the propulsion motor 22 to the input shaft 24 of the gearbox 14, 16.

The invention thus relates to a sensor assembly in a gearbox which is used for positioning, where the sensor assembly comprises a relative to the gearbox housing 18 fixed sensor 20, and where the angle between the gearbox housing 18 and the output shaft 26 of the gearbox 14, 16 is measured using a shaft 28 fixed to the output shaft 26 and connected to the sensor 20.

When positioning using a gearbox it is important to have end positions for the rotation so that one does not damage hoses etc. This can be done using mechanical stop devices but the disadvantage is that these must be strong in order to absorb the rotational force, and at rotations >360 degrees it is difficult in practice to make room for sufficient end position stop devices. By using a sensor assembly according to the invention the angle in the gearboxes that are arranged on the drill boom are measured. Therefore according to the invention a control system is provided, which receives information about the actual angle and cuts down the power of the motor of the gearbox when approaching a pre-programmed end position. By cutting down the motor power in steps near the end positions, a soft stop is obtained which decreases the stresses on the drill boom. It is also easy to make the end position adjustable if one for example wishes to be able to set a small allowed angle for the rotation of the drill boom so that the drill boom will not be able to collide with for example rock surfaces situated on a side of the rock drilling rig or with the rock drilling rig itself, which gives increased safety. This is an inexpensive way to create end positions as the angle already is measured for the positioning. Thus, the sensor assembly comprises a control system which receives information about the actual angle in a gearbox 14, 16 and cuts down the power to the motor 22 of the gearbox 14, 16 when the gearbox 14, 16 approaches a pre-programmed end position.

The sensor assembly according to the invention is illustrated a being arranged in a gearbox in a drill boom on a rock drilling rig, but can also be used in other types of mining or construction machines where a similarly accurate movement is required. The angle sensor, that is the sensor, is preferably a single-revolution sensor in the embodiments described as a rotation of more than one revolution could cause breakage on hoses and the like, but the angle sensor may of course be arranged as a multi-revolution sensor in applications where this is desirable.

## Claims

1. Gearbox and sensor assembly in the gearbox arranged to be used for positioning, where the sensor assembly comprises a relative to a gearbox housing (18) fixed sensor (20), wherein a shaft (28) fixed to an output shaft (26) of the gearbox (14,16) and connected to the sensor (20) is used when measuring the angle in the gearbox between the gearbox housing (18) and the output shaft (26) of the gearbox (14, 16), where the gearbox (14, 16) is arranged to achieve the rotations for a rotational degree of freedom (Z4, Z5) in a joint (3, 5) of a drill boom (4) in a rock drilling rig (2), where the shaft (28) fixed to the output shaft (26) and connected to the sensor (20) passes through the center of the gearbox (14, 16), and through a central through hole (40) in the gearbox propulsion motor (22) connected to the input shaft of the gearbox (14,16), where the sensor assembly comprises a control system arranged to receive information about the actual angle in the gearbox (14, 16) **characterised in that** the control system is arranged to cut down the power to the motor (22) of the gearbox (14, 16) when the gearbox (14, 16) approaches a pre-programmed end position, and that a gear of the gearbox (14, 16) is a planetary gear.

2. Gearbox and sensor assembly as claimed in claim 1, **characterised in that** the output shaft (26) and the shaft (28) fixed to the output shaft (26) and connected to the sensor (20) are made in one piece.

## Patentansprüche

1. Getriebe und Sensoranordnung in dem Getriebe, die angeordnet sind, um zur Positionierung verwendet zu werden, wobei die Sensoranordnung relativ zu einem Getriebegehäuse (18) einen befestigten Sensor (20) umfasst, wobei eine Welle (28), die an einer Ausgangswelle (26) des Getriebes (14, 16) befestigt und mit dem Sensor (20) verbunden ist, verwendet wird, wenn der Winkel in dem Getriebe zwischen dem Getriebegehäuse (18) und der Ausgangswelle (26) des Getriebes (14, 16) gemessen wird, , wobei das Getriebe (14, 16) angeordnet ist, um in einer Gelenkverbindung (3, 5) eines Bohrauslegers (4) in einer Gesteinsbohranlage (2) Drehungen für einen Drehfreiheitsgrad (Z4, Z5) zu erhalten, wobei die Welle (28), die an der Ausgangswelle (26) befestigt und mit dem Sensor (20) verbunden ist, durch die Mitte des Getriebes (14, 16) verläuft, und durch eine zentrale Durchgangsöffnung (40) in dem Getriebeantriebsmotor (22) verläuft, der mit der Eingangswelle des Getriebes (14, 16) verbunden ist, wobei die Sensoranordnung ein Steuersystem umfasst, das angeordnet ist, um Informationen über den tatsächlichen Winkel in dem Getriebe (14, 16) zu empfangen, **dadurch gekennzeichnet, dass** das Steuersystem angeordnet ist, um die Leistungszufuhr zu dem Motor (22) des Getriebes (14, 16) abzuschalten bzw. zu drosseln, wenn sich das Getriebe (14, 16) einer vorprogrammierten Endposition nähert, und dass ein Getriebe des Getriebes (14, 16) ein Planetengetriebe ist.

2. Getriebe und Sensoranordnung nach Ansprüch 1, **dadurch gekennzeichnet, dass** die Ausgangswelle (26) und die Welle (28), die an der Ausgangswelle (26) befestigt und mit dem Sensor (20) verbunden ist, einteilig in einem Stück hergestellt sind.

## Revendications

1. Boîte de vitesses et ensemble capteur dans la boîte de vitesses, prévu pour être utilisé pour le positionnement, l'ensemble capteur comprenant un capteur fixe (20) par rapport à un boîtier (18) de la boîte de vitesses, un arbre (28) fixé à un arbre de sortie (26) de la boîte de vitesses (14, 16) et connecté au capteur (20) étant utilisé lors de la mesure de l'angle dans la boîte de vitesses entre le boîtier (18) de la boîte de vitesses et l'arbre de sortie (26) de la boîte de vitesses (14, 16), dont la boîte de vitesses (14, 16) est prévue pour réaliser les rotations pour un degré de liberté de rotation (Z4, Z5) dans une articulation (3, 5) d'un bras de forage (4) d'un équipement de forage de roche (2), l'arbre (28) fixé à l'arbre de sortie (26) et connecté au capteur (20) passe à travers le centre de la boîte de vitesses (14, 16), et passe à travers un trou traversant central (40) dans le moteur de propulsion (22) de la boîte de vitesses connecté à l'arbre d'entrée de la boîte de vitesses (14, 16), l'ensemble capteur comprend un système de commande prévu pour recevoir des informations concernant l'angle actuel dans la boîte de vitesses (14, 16) **caractérisés en ce que** le système de commande est prévu pour réduire la puissance fournie au moteur (22) de la boîte de vitesses (14, 16) lorsque la boîte de vitesses (14, 16) approche une position d'extrémité préprogrammée, et **en ce qu'**un engrenage de la boîte de vitesses (14, 16) est un engrenage planétaire.

2. Boîte de vitesses et ensemble capteur selon la revendication 1, **caractérisés en ce que** l'arbre de sortie (26) et l'arbre (28) fixé à l'arbre de sortie (26) et connecté au capteur (20) sont réalisés d'une seule pièce.
